# FASCICULE DE BREVET EUROPEEN

(11) **EP 3 421 820 B1**
(45) Date de publication et mention de la délivrance du brevet: **09.08.2023**
(21) Numéro de dépôt: 18179828.1
(22) Date de dépôt: 26.06.2018
(51) Int. Cl.: F16B 2/06, G21F 7/04, F16B 2/12

(54) **BARRETTE DE MONTAGE D'UN PANNEAU SE FIXANT A UN CADRE PORTEUR A FLANCS PLATS DELIMITANT UNE ENCEINTE CONFINEE**
MONTAGELEISTE FÜR EIN PANEEL, DIE AN EINEM TRAGRAHMEN MIT FLACHEN SEITENTEILEN BEFESTIGT WIRD, DER EINEN GESCHLOSSENEN RAUM BEGRENZT
STRIP FOR MOUNTING A PANEL WHICH ATTACHES TO A SUPPORT FRAME HAVING FLAT FLANKS DEFINING A CONFINED ENCLOSURE

(30) Priorité: 29.06.2017 FR 1756054
(43) Date de publication de la demande: 02.01.2019
(73) Titulaire: Commissariat à l'énergie atomique et aux énergies alternatives, 75015 Paris (FR)
(72) Inventeur: BOITEUX, Olivier, 21690 SOURCE SEINE (FR); OLAGNOL, Guillaume, 21440 SAINT MARTIN DU MONT (FR); PARRENIN, Cédric, 21120 TIL-CHATEL (FR)
(74) Mandataire: Brevalex

(56) Documents cités:
- EP-A1- 0 383 213
- DE-A1- 2 137 426
- DE-U1-202004 005 148
- FR-A1- 2 273 631
- FR-A1- 3 021 076
- US-A1- 2013 112 826
- US-A1- 2014 086 680

## Description

### DOMAINE TECHNIQUE

L'invention concerne l'assemblage d'une enceinte fermée, telle qu'une boîte à gants pour la manipulation de matière radioactive, cette enceinte comprenant une structure portant un panneau plan qui est appliqué sur un cadre de cette structure et serré sur ce cadre par des moyens de serrage.

### ETAT DE LA TECHNIQUE ANTERIEURE

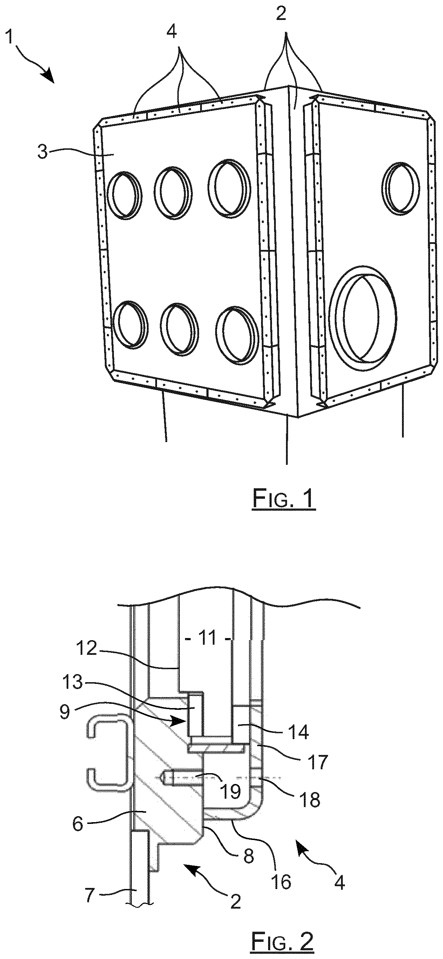

Comme visible sur la figure 1, une enceinte 1 de type boîte à gants pour la manipulation de matière radioactive, est formée d'une structure porteuse rigide ou carcasse 2 ayant une forme générale de parallélépipède, sur laquelle sont rapportés des panneaux 3, pouvant être transparents.

La fixation des panneaux pour l'enceinte de la figure 1, correspond à celle divulguée en référence à la figure 1 dans le document US 2005/0055905 A1, qui est représentée plus en détail sur la figure 2 du présent document. Cette fixation est assurée grâce à des équerres serre-joints 4 fixées par des vis à des profilés usinés 6 de la structure porteuse formant des cadres qui en délimitent les ouvertures.

Chaque profilé 6 présente une section transversale généralement rectangulaire rigidement solidarisée à un corps 7 de la carcasse, par exemple par soudage, et qui comporte une face externe 8 orientée vers l'extérieur de l'enceinte, pourvue d'un décrochement 9.

Comme visible sur la figure 2, un panneau 11 est appliqué le long du bord de sa face interne 12, sur la face externe 8 du profilé 6, par l'intermédiaire d'un joint d'étanchéité 13 interposé entre ce panneau 11 et la face 8, ce joint étant logé dans le décrochement 9.

Complémentairement, un contre-cadre 14 est interposé entre la face externe du panneau 11 et l'équerre serre-joint 4. Cette équerre serre-joint 4 comporte un flanc latéral 16 et un flanc de serrage 17 perpendiculaire venant en appui sur le contre-cadre 14. Comme visible sur la figure 2, le flanc de serrage 17 comporte un perçage 18 situé en vis-à-vis d'un taraudage 19 débouchant dans la face externe 8, et une vis non représentée, traversant ce perçage et vissée dans ce taraudage 19 permet de serrer le flanc 17 sur le contre-cadre 14 pour comprimer le panneau sur le joint 13.

Les équerres serre-joints 4 sont ainsi réparties sur tout le pourtour du panneau 11 pour le presser de manière uniforme et étanche contre la structure porteuse ou carcasse.

En pratique, le montage d'une telle boîte à gants est fastidieux, du fait notamment que le serrage des premières équerres serre-joints en maintenant le contre-cadre en position tend à faire bouger ce contre-cadre voire à le faire tomber. Par ailleurs, le basculement des équerres lors du montage est possible, et un jeu fonctionnel est généralement présent entre le flanc 16 des équerres serre-joints et le profilé 6.

En cas de contamination externe, par exemple lors du perçage d'un gant, la contamination peut tomber et s'insérer autour et entre les équerres serre-joints qui sont des pièces en tôle difficile à décontaminer. Ceci est encore accentué par les filets des vis de serrage qui sont exposés à la contamination.

Enfin, les séries d'équerres serre-joints qui équipent une boîte à gants dépassent, de sorte qu'elles accrochent les vêtements des opérateurs.

Le but de l'invention est de proposer une solution pour remédier à ces inconvénients.

### RESUME DE L'INVENTION

A cet effet, l'invention a pour objet une barrette de montage d'un panneau par serrage du pourtour de ce panneau sur un profilé d'une structure porteuse pour constituer une enceinte fermée, cette barrette comprenant un corps incluant une base prolongée par un flanc de serrage s'étendant à angle droit par rapport à cette base, avec des trous de fixation pour fixer rigidement cette barrette au profilé de la structure porteuse par des vis, caractérisée en ce que les trous de fixation traversent la base ainsi que le flanc de serrage, en ce que le flanc de serrage comprend plusieurs trous taraudés, chaque trou taraudé étant équipé d'une vis de serrage pour serrer le pourtour du panneau contre le profilé de la structure porteuse, et en ce qu'elle comprend une languette protectrice couvrant le flanc de serrage et l'espace séparant ce flanc du panneau lorsque la barrette est en place.

Cette barrette a ainsi une forme allongée facilitant sa préhension, et elle porte plusieurs vis de serrage régulièrement espacées, ce qui simplifie significativement le montage d'un panneau.

L'invention a également pour objet une barrette ainsi définie, comprenant en outre un tampon d'appui de même longueur que le corps et longeant le flanc de serrage qui porte chaque vis de serrage, au moins une vis de serrage étant solidarisée au tampon d'appui tout en étant libre de tourner par rapport à ce tampon d'appui.

L'invention a également pour objet une barrette ainsi définie, comprenant deux vis de serrage solidarisées au tampon d'appui tout en étant chacune libre de tourner par rapport à ce tampon, ces deux vis étant les deux vis les plus proches des extrémités du corps.

L'invention a également pour objet une barrette ainsi définie, dans laquelle la languette est un élément rapporté fixé par emboîtement et/ou collage en face externe du flanc de serrage portant les vis de serrage.

L'invention a également pour objet une barrette ainsi définie, dans laquelle l'élément rapporté portant la languette est emboîté dans les trous taraudés du flanc de serrage.

### BREVE DESCRIPTION DES DESSINS

La figure 1 déjà décrite est une vue en perspective d'une boîte à gants de l'Etat de la technique ;
La figure 2 déjà décrite est une vue en coupe d'un profilé de structure de boîte à gants auquel sont fixés deux panneaux par des serre-joints conformément à l'Etat de la technique ;
La figure 3 est une vue en coupe transversale d'une barrette de serrage selon l'invention qui enserre un profilé et un panneau ;
La figure 4 est une vue en perspective d'un corps de barrette selon l'invention ;
La figure 5 est une vue partielle d'un panneau monté sur une structure au moyen de barrettes de serrage selon l'invention.

### EXPOSE DETAILLE DE MODES DE REALISATION PARTICULIERS

L'idée à la base de l'invention est de remplacer les séries d'équerres serre-joints de l'Etat de la technique, par des barrettes linéaires de serrage dont la longueur peut être adaptée, intégrant tous les éléments nécessaires à un serrage de qualité, comme par exemple le contre-cadre.

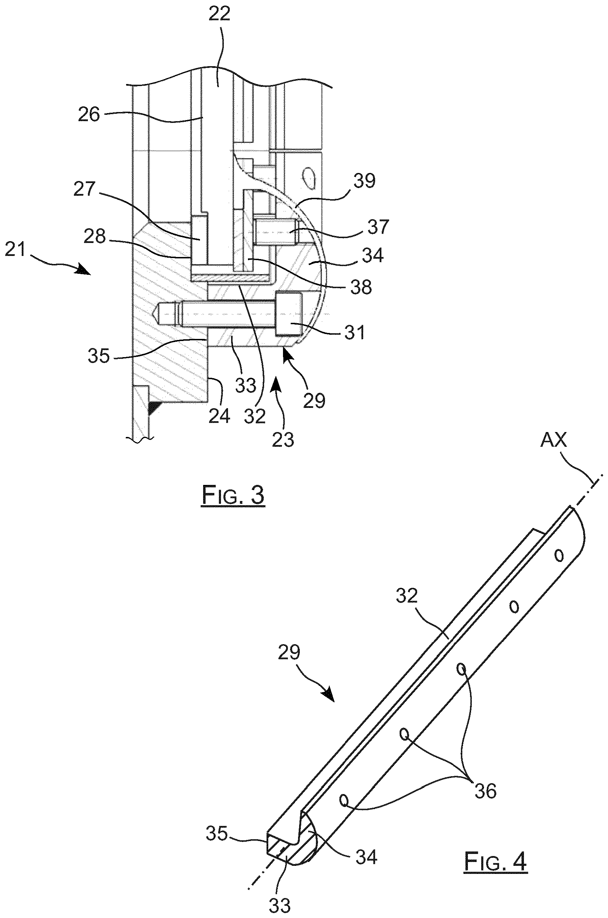

Sur la figure 3, on a représenté un profilé 21 de structure d'enceinte portant un panneau latéral 22 qui est monté sur cette structure grâce à une barrette selon l'invention repérée par 23.

Le profilé 21 comporte une face 24 d'appui d'une face interne 26 du panneau 22, et le panneau 22 est appliqué contre cette face d'appui 24 par l'intermédiaire d'un joint d'étanchéité 27, qui est logé dans un décrochement 28 du profilé 21.

La barrette 23 comporte un corps principal 29, ayant en section transversale la forme de la lettre L, et qui est destiné à venir chevaucher le bord d'un panneau 22 en étant fixé par deux vis 31 à la face externe 24 du profilé 21, ces deux vis 31 étant situées au niveau des extrémités du corps 29.

Ce corps principal 29, qui est par exemple fabriqué en aluminium, présente en section une forme d'équerre délimitant une rigole longitudinale 32 s'étendant selon la direction principale de ce corps, notée AX. Il comprend une jambe constituant sa base repérée par 33 et un flanc de serrage 34 correspondant chacun à une branche de la section transversale en L de ce corps.

La base 33 du corps comporte une face d'appui 35 qui s'applique contre la face externe 24 du profilé ou cadre 21, et qui s'étend parallèlement à la direction générale du flanc de serrage 34. Ainsi lorsque la barrette est montée, le serrage des vis 31 permet de plaquer la face d'appui 35 contre la face externe 24 du profilé formant cadre 21, le flanc de serrage 34 s'étendant ainsi parallèlement à la face 24 et à distance de cette face. Dans cette situation, le flanc 34 avec la base 33 et le profilé 21 délimitent conjointement une gorge apte à recevoir une bordure de panneau et à la plaquer contre le profilé 21.

Le flanc de serrage 34 comporte ici cinq trous taraudés traversants 36 parallèles les uns aux autres, perpendiculaires à la direction AX et débouchant chacun dans la rigole 32 au niveau de la face interne du flanc 34. Chaque trou taraudé est destiné à recevoir une vis de serrage telle que la vis sans tête 37 apparaissant sur la figure 3, dont l'extrémité de vissage comporte une empreinte. Cette empreinte est par exemple une empreinte à six pans creux permettant l'engagement d'une clé ou d'un outil approprié pour procéder au serrage.

Comme visible dans la figure 3, le flanc 34 portant les vis de serrage présente une épaisseur suffisante pour que ces vis, qui sont en outre prévues relativement courtes, ne dépassent pas de la face externe du flanc de serrage 34 lorsqu'elles sont en place et serrées.

L'extrémité de serrage de chaque vis 37 dépasse ainsi dans la rigole 32 de la face interne du flanc 34 pour être en vis-à-vis du panneau 22 à maintenir. Comme visible sur la figure 3, la barrette selon l'invention comporte encore un élément de contre-cadre, repéré par 38, et qui est solidarisé au reste de la barrette pour être imperdable de manière à simplifier les opérations de montage de la boîte.

Plus particulièrement, deux des cinq vis 37 ont des extrémités de serrage en forme d'embout ou de téton, et ces extrémités sont engagées et serties chacune dans un trou correspondant de l'élément de contre-cadre 38. Ces deux vis 37 qui sont ici les vis situées en extrémité du corps 29 sont ainsi solidarisées à l'élément de contre-cadre 38 pour le rendre imperdable, tout en étant libres de tourner par rapport à cet élément. Les trois autres vis 37, à savoir ici les trois vis centrales, peuvent quant à elles être montées normalement.

Comme il ressort des figures, l'élément de contre-cadre 38 constitue un tampon d'appui formé par une bande ou plaque à contour rectangulaire dont la longueur correspond à la longueur du corps de barrette, et dont la largeur correspond à la profondeur de la rigole 32.

Grâce à ce montage, l'élément de contre-cadre 38 est imperdable par rapport au reste de la barrette, et il assure une répartition homogène des efforts de serrage des différentes vis 37 lorsque l'ensemble est en place.

Le nombre de vis que comporte une barrette peut être adapté lors de la conception à l'application pour laquelle la barrette est destinée, en fonction notamment de l'intensité d'effort presseur moyen que l'on souhaite atteindre.

Le montage est assuré en fixant d'abord la barrette au cadre avec ses deux vis 31, pour ensuite réaliser un premier serrage de maintien en serrant les deux vis d'extrémités 37 pour plaquer l'élément de contre-cadre 38 sur le panneau. Le serrage de l'ensemble des vis 37 avec une clé dynamométrique permet ensuite de serrer le contre-cadre 38 sur le panneau à une valeur d'effort presseur prédéterminée.

Complémentairement, une jupe protectrice, sous forme d'une languette flexible formant bavette repérée par 39, en matière plastique, est ajoutée à l'ensemble. Cette bavette 39 couvre la face externe du flanc de serrage 34 avec ses trous 36 en s'étendant de manière étanche jusqu'au panneau 22, pour éviter une rétention de contamination dans la région du contre-cadre 38 et des vis sans tête 37.

Cette bavette 39 en matière plastique est suffisamment flexible pour s'emboîter sur la face externe du flanc de serrage 34, et peut le cas échéant être prévue pour s'emboîter également sur les trous 36 afin d'améliorer sa fixation.

Chaque barrette peut être prééquipée d'une languette protectrice de même longueur que son corps. Mais on peut aussi prévoir de rapporter une même languette sur un ensemble de barrettes en place pour favoriser une meilleure protection contre la contamination, en couvrant les interstices séparant les barrettes.

Chaque languette peut se présenter sous forme d'un capot de protection s'emboîtant et se déboîtant sans outil sur le flanc du corps de barrette et dans les trous filetés de ses vis, de manière réversible.

Comme visible sur les figures, la barrette selon l'invention se fixe par vissage à la face externe 24 du profilé pourvu d'un joint 27 et sur lequel un panneau 22 est mis en place, pour les fixer l'un à l'autre en les comprimant entre l'élément de contre-cadre 38 pressé par les vis 37 serrées et le flanc de serrage 34 du corps de barrette.

Grâce à l'élément de contre-cadre monté de manière à être imperdable, le montage de la barrette est significativement simplifié puisqu'un opérateur peut maintenir d'une main le corps de barrette en place et de l'autre main serrer les vis de la barrette en question. Par ailleurs, l'absence de relief et d'aspérités de ces barrettes facilite leur manipulation et leur nettoyage.

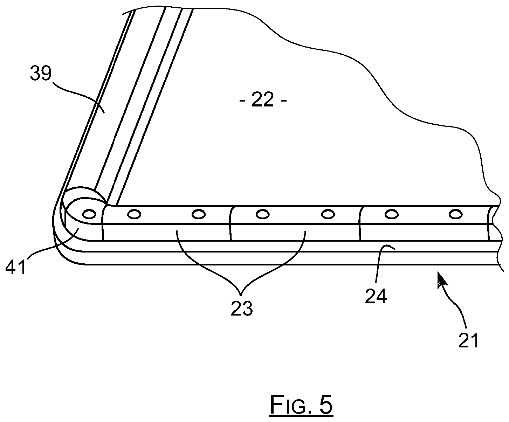

Comme représenté sur la figure 5, les barrettes 23 sont montées les unes à côté des autres le long du bord du cadre pour serrer ce cadre sur tout son pourtour afin d'assurer une étanchéité appropriée. Dans l'exemple de la figure 5, les différentes barrettes de l'un des bords sont couvertes par une même languette flexible 39 pour couvrir les interstices séparant ces barrettes.

A chaque angle du cadre une barrette d'angle 41 permet de former une jonction continue avec les barrettes de chaque côté, cette barrette d'angle 41 étant avantageusement couverte d'un cache de coin non représenté, ayant le même profil que la bavette 39 en s'étendant selon un angle droit, de façon à établir une continuité avec les bavettes rectilignes des côtés adjacents.

D'une manière générale, l'invention s'applique aux enceintes fermées constituées d'une structure portant des panneaux serrés sur cette structure, de telles enceintes existant en milieu hospitalier dans les couveuses. De telles enceintes peuvent aussi correspondre à des espaces dédiés à l'isolement d'agents chimiques et bactériologique dans le domaine médical ou pharmaceutique. Il peut également s'agir d'enceintes mobiles à montage rapide sur des théâtres d'opérations civils ou militaires.

## Revendications

1. Barrette (23) de montage d'un panneau (22) par serrage du pourtour de ce panneau sur un profilé (21) d'une structure porteuse pour constituer une enceinte fermée, cette barrette (23) comprenant un corps (29) incluant une base (33) prolongée par un flanc de serrage (34) s'étendant à angle droit par rapport à cette base (33), avec des trous de fixation (36) pour fixer rigidement cette barrette au profilé (21) de la structure porteuse par des vis (31), **caractérisé en ce que** les trous de fixation (36) traversent la base (33) ainsi que le flanc de serrage (34), **en ce que** le flanc de serrage (34) comprend plusieurs trous taraudés (36), chaque trou taraudé étant équipé d'une vis de serrage (37) pour serrer le pourtour du panneau (22) contre le profilé (21) de la structure porteuse, et **en ce qu'**elle comprend une languette protectrice (39) couvrant le flanc de serrage (34) et l'espace séparant ce flanc du panneau (22) lorsque la barrette est en place.

2. Barrette (23) selon la revendication 1, comprenant en outre un tampon d'appui (38) de même longueur que le corps (29) et longeant le flanc de serrage (34) qui porte chaque vis de serrage (37), au moins une vis de serrage (37) étant solidarisée au tampon d'appui (38) tout en étant libre de tourner par rapport à ce tampon d'appui (38).

3. Barrette selon la revendication 2, comprenant deux vis de serrage (37) solidarisées au tampon d'appui (38) tout en étant chacune libre de tourner par rapport à ce tampon (38), ces deux vis étant les deux vis les plus proches des extrémités du corps (29).

4. Barrette selon la revendication 3, dans laquelle la languette (39) est un élément rapporté fixé par emboîtement et/ou collage en face externe du flanc de serrage (34) portant les vis de serrage (37).

5. Barrette selon la revendication 4, dans laquelle l'élément rapporté portant la languette est emboîté dans les trous taraudés (36) du flanc de serrage (34).

## Patentansprüche

1. Montageleiste (23) für ein Paneel (22), bei der der Umfang dieses Paneels auf ein Profil (21) einer tragenden Struktur geklemmt wird, um einen geschlossenen Raum zu bilden, wobei diese Leiste (23) einen Körper (29) einschließlich einer Basis (33) umfasst, die durch eine Klemmflanke (34) verlängert ist, die sich im rechten Winkel zu dieser Basis (33) erstreckt, mit Befestigungslöchern (36), um diese Leiste starr am Profil (21) der tragenden Struktur durch Schrauben (31) zu befestigen, **dadurch gekennzeichnet, dass** die Befestigungslöcher (36) sowohl durch die Basis (33) als auch durch die Klemmflanke (34) hindurchgehen, dass die Klemmflanke (34) mehrere Gewindelöcher (36) umfasst, wobei jedes Gewindeloch mit einer Klemmschraube (37) ausgestattet ist, um den Umfang des Paneels (22) gegen das Profil (21) der tragenden Struktur zu klemmen, und dass sie eine Schutzzunge (39) umfasst, die die Klemmflanke (34) und den Raum abdeckt, der diese Flanke von der Platte (22) trennt, wenn die Leiste angebracht ist.

2. Leiste (23) nach Anspruch 1, ferner umfassend einen Stützpuffer (38), der die gleiche Länge wie der Körper (29) hat und entlang der Klemmflanke (34) verläuft, die jede Klemmschraube (37) trägt, wobei mindestens eine Klemmschraube (37) fest mit dem Stützpuffer (38) verbunden ist, während sie sich relativ zu diesem Stützpuffer (38) frei drehen kann.

3. Leiste nach Anspruch 2, umfassend zwei Klemmschrauben (37), die fest mit dem Stützpuffer (38) verbunden sind, während sie sich jeweils relativ zu diesem Puffer (38) frei drehen können, wobei diese beiden Schrauben die beiden nächstgelegenen Schraubenenden des Körpers (29) sind.

4. Leiste nach Anspruch 3, bei der die Zunge (39) ein Anbauelement ist, das durch Einstecken und/oder Kleben an der Außenfläche der Klemmflanke (34), die die Klemmschrauben (37) trägt, befestigt ist.

5. Leiste nach Anspruch 4, bei der das die Zunge tragende Anbauelement in die Gewindelöcher (36) der Klemmflanke (34) eingesteckt ist.

## Claims

1. A bar (23) for mounting a panel (22) by clamping the periphery of this panel on a profile (21) of a support structure to form a closed enclosure, this bar (23) comprising a body (29) including a base (33) extended by a clamping flank (34) extending at a right angle to this base (33), with fastening holes (36) for rigidly fastening this bar to the profile (21) of the support structure by screws (31), **characterised in that** the fastening holes (36) pass through the base (33) as well as the clamping flank (34), **in that** the clamping flank (34) comprises several tapped holes (36), each tapped hole being equipped with a clamping screw (37) to clamp the periphery of the panel (22) against the profile (21) of the support structure, and **in that** it comprises a protective tab (39) covering the clamping flank (34) and the space separating this flank from the panel (22) when the bar is in place.

2. The bar (23) according to claim 1, further comprising a bearing pad (38) of the same length as the body (29) and running along the clamping flank (34) which carries each clamping screw (37), at least one clamping screw (37) being secured to the bearing pad (38) while being free to rotate relative to this bearing pad (38).

3. The bar according to claim 2, comprising two clamping screws (37) secured to the bearing pad (38) while each being free to rotate relative to this pad (38), these two screws being the two screws closest to the ends of the body (29).

4. The bar according to claim 3, wherein the tab (39) is an insert fastened by interlocking and/or gluing to the outer face of the clamping flank (34) carrying the clamping screws (37).

5. The bar according to claim 4, wherein the insert bearing the tab is fitted into the tapped holes (36) of the clamping flank (34).
